# EUROPÄISCHE PATENTANMELDUNG

(11) **EP 1 769 662 A1**
(43) Veröffentlichungstag der Anmeldung: **04.04.2007**
(21) Anmeldenummer: 06019666.4
(22) Anmeldetag: 20.09.2006
(51) Int. Cl.: A01B 79/00, A01B 69/00

(54) **Landwirtschaftliche Arbeitseinheit mit einem Arbeitsaggregat zum Erzeugen einer Objektreihe**

(30) Priorität: 30.09.2005 DE 102005047306
(71) Anmelder: CLAAS Saulgau GmbH, 88348 Bad Saulgau (DE)
(72) Erfinder: Geng, Manfred, 88348 Bad Saulgau (DE)
(74) Vertreter: Roth, Klaus

(57) **Zusammenfassung**

Es wird eine landwirtschaftliche Arbeitseinheit mit einer ersten, wenigstens ein erstes Arbeitsaggregat (2), insbesondere ein Mähwerk, Schwader (2), Pflug oder dergleichen, dergleichen, umfassenden landwirtschaftlichen und von einer ersten Bedienperson autonom lenkbaren Arbeitsmaschine zum Bearbeiten eines landwirtschaftlichen Feldes (20) und/oder von auf dem Feld angeordneten Pflanzen (15), wobei die erste landwirtschaftliche Arbeitsmaschine auf dem Feld eine von der Bedienperson frei wählbare Fahrstrecke abfährt, so dass das Arbeitsaggregat (2, 11, 16, 19) zum Erzeugen einer auf dem Feld angeordneten, frei gewählten Objektreihe (4), insbesondere einer Erntegutreihe (4) und/oder einer Bestandskante, ausgebildet ist und die Arbeitsmaschine wenigstens eine Positionsbestimmungseinheit (6, 7) zum Bestimmen der Position, insbesondere der Positionskoordinaten, der Arbeitsmaschine und/oder des Arbeitsaggregats (2) umfasst, wobei wenigstens eine Speichereinheit (6, 7) zum Speichern der Position vorgesehen ist, vorgeschlagen, mit der die Bearbeitung weiter automatisierbar und/oder erweiterte Anwendungsmöglichkeiten realisierbar sind. Dies wird erfindungsgemäß dadurch erreicht, dass die Speichereinheit (6, 7) als Objektreihenspeichereinheit (6, 7) zum Speichern der Bahnlinie (10) der auf dem Feld angeordneten, frei gewählten Objektreihe (4) ausgebildet ist.

## Beschreibung

Die Erfindung betrifft eine landwirtschaftliche Arbeitseinheit mit einer ersten, wenigstens ein erstes Arbeitsaggregat, insbesondere ein Mähwerk, Schwader, Pflug oder dergleichen, umfassenden landwirtschaftlichen und von einer ersten Bedienperson autonom lenkbaren Arbeitsmaschine zum Bearbeiten eines landwirtschaftlichen Feldes und/oder von auf dem Feld angeordneten Pflanzen, wobei die erste landwirtschaftliche Arbeitsmaschine auf dem Feld eine von der Bedienperson frei wählbare Fahrstrecke abfährt, so dass das Arbeitsaggregat zum Erzeugen einer auf dem Feld angeordneten, frei gewählten Objektreihe, insbesondere einer Erntegutreihe und/oder einer Bestandsgrenze, ausgebildet ist, nach dem Oberbegriff des Anspruchs 1.

### Stand der Technik

Aus der DE 103 28 395 A1 ist beispielsweise eine Landmaschine sowie ein Verfahren zur Steuerung einer solchen Landmaschine bekannt, wobei mittels einer Positionsbestimmungseinrichtung die Ist-Position der Landmaschine relativ zu einem vorgegebenen Soll-Fahrweg bestimmt wird und Steuerbefehle für die Lenkung der Landmaschine automatisch generiert werden. Hierbei ist eine Bildsteuerung der Landmaschine vorgesehen. Mittels einer an der Landmaschine angeordneten Bilderfassungseinrichtung wird ein aktuelles Bild des tatsächlichen Fahrwegs generiert, das mit zuvor erfassten bzw. abgespeicherten Bilddaten verglichen wird. In Abhängigkeit dieses Bildvergleichs werden die Steuerbefehle für die Lenkung der Landmaschine generiert. Nachteilig bei einem derartigen System ist jedoch, der enorme EDV-Aufwand sowohl bezüglich der zu handhabenden Speichermengen als auch bezüglich der einzusetzenden Programme wie z.B. Muster-Erkennungsprogramme oder dergleichen.

Darüber hinaus ist beispielsweise aus der DE 101 29 136 A1 oder der DE 197 43 884 C2 ein automatisiertes Lenken einer Landmaschine bekannt, wobei mittels Sensoren eine Bestandskante, beispielsweise beim Pflügen oder Mähdreschen etc., erfasst und entlang derer die Landmaschine geführt bzw. gelenkt wird.

Weiterhin ist in der Landtechnik bereits bekannt, Fremdkörper wie abgebrochene Zinken von Schwadern oder dergleichen zu detektieren und mittels einer Bestimmung der Positionskoordinaten des Fremdkörpers beispielsweise einen Feldhäcksler, etc. derart zu steuern, dass dieser am Ort des Fremdkörpers z.B. das Abernten eines entsprechenden Schwades kurzzeitig aussetzt. Hierdurch wird das Einziehen des Fremdkörpers bzw. Zinken verhindert, so dass eine Beeinträchtigung des Feldhäckslers verhindert wird. Derartige Landmaschinen sind meist mit dem GPS-System oder dergleichen zur exakten Bestimmung der Positionskoordinaten bzw. des Ortes des Fremdkörpers ausgestattet, wie dies beispielsweise in der EP 1 266 560 A1 offenbart ist.

### Aufgabe und Vorteile der Erfindung

Aufgabe der Erfindung ist es demgegenüber, eine landwirtschaftliche Arbeitseinheit mit einer ersten, wenigstens ein erstes Arbeitsaggregat, insbesondere ein Mähwerk, Schwader, Pflug oder dergleichen, umfassenden landwirtschaftlichen und von einer ersten Bedienperson autonom lenkbaren Arbeitsmaschine zum Bearbeiten eines landwirtschaftlichen Feldes und/oder von auf dem Feld angeordneten Pflanzen, wobei die erste landwirtschaftliche Arbeitsmaschine auf dem Feld eine von der Bedienperson frei wählbare Fahrstrecke abfährt, so dass das Arbeitsaggregat zum Erzeugen einer auf dem Feld angeordneten, frei gewählten Objektreihe ausgebildet ist und die Arbeitsmaschine wenigstens eine Positionsbestimmungseinheit zum Bestimmen der Position bzw. des Ortes der Arbeitsmaschine und/oder des Arbeitsaggregats umfasst, wobei wenigstens eine Speichereinheit zum Speichern der Position vorgesehen ist, vorzuschlagen, mit der die Bearbeitung weiter automatisierbar und/oder erweiterte Anwendungsmöglichkeiten realisierbar sind.

Diese Aufgabe wird, ausgehend von einer landwirtschaftlichen Arbeitseinheit der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine landwirtschaftliche Arbeitseinheit dadurch aus, dass die Speichereinheit als Objektreihen-Speichereinheit zum Speichern der Bahnlinie der auf dem Feld angeordneten, frei gewählten Objektreihe ausgebildet ist. Hiermit eröffnen sich völlig neue Möglichkeiten der Automatisierung in der Landwirtschaft beim Bearbeiten von Feldern bzw. von auf dem Feld angeordneten Pflanzen.

Wesentlich bei der Erfindung ist die frei Wählbarkeit des jeweiligen Fahrers der jeweiligen Arbeitsmaschine wie Feldhäcksler, Traktor oder dergleichen in Bezug zu den abzufahrenden ersten und/oder folgenden Fahrwegen. Gemäß der Erfindung ist zumindest die erste Bearbeitungsfahrt frei bzw. nach den örtlichen Gegebenheiten und/oder in Abhängigkeit der Bearbeitungsart vom jeweiligen Fahrer autonom bzw. nach Gutdünken bzw. Belieben festzulegen bzw. zu generieren. Das bedeutet, dass zumindest der erste Bearbeitungsfahrweg erst vor Ort auf dem Feld generiert bzw. festgelegt wird. Hierbei werden im Allgemeinen unterschiedliche Fahrer bei gleichen, auszuführenden Aufgaben bzw. Tätigkeiten sicherlich wenigstens teilweise unterschiedliche Fahrwege als vorteilhaft ausdenken bzw. auswählen und abfahren.

Häufig werden bei der Bearbeitung eines einzigen Feldes vom Fahrer mehrfach einzelne Fahrwegeabschnitte abgefahren, bei denen der Fahrer diese frei bzw. beliebig auswählen bzw. abfahren kann. Beispielsweise wird beim Mähen von Grüngut oder dergleichen für die Heuernte etc. sowohl an den Feldrändern als auch zum Teil mehrfach in mittigen Feldbereichen eine erste Mahd bzw. ein erster Fahrweg und somit die Objektreihe generiert, die zwischen noch unbearbeiteten Feldbereichen angeordnet ist bzw. liegt. Erst bei der zweiten Überfahrt orientiert sich der Fahrer oder wie nachfolgend als vorteilhafte Variante der Erfindung das entsprechende System an dieser ersten Fahrt bzw. an der hiermit erzeugten Objektreihe bzw. Bestandskante.

Generell kann durch das Abspeichern der von der Arbeitsmaschine bzw. dem Arbeitsaggregat erst auf dem Feld erzeugten Objektreihe bzw. deren Bahnlinie z.B. einerseits die Länge der Bahnlinie bzw. Objektreihe für Abrechnungszwecke, beispielsweise bei Lohnunternehmern, verwendet werden. Darüber hinaus eröffnen sich völlig neue Möglichkeiten bei der Kontrolle bzw. Lenkung der Arbeitsmaschine und/oder einer der die Objektreihe erzeugenden Arbeitsmaschine nachfolgenden zweiten Arbeitsmaschine.

Grundsätzlich kann in vorteilhafter Weise die abgespeicherte Bahnlinie der erst auf dem Feld erzeugten Objektreihe zur Kontrolle bzw. Lenkung eines nachfolgenden Arbeitsschrittes verwendet werden.

Gemäß der Erfindung werden somit sowohl die Abrechnung beim Bearbeiten entsprechender Felder bzw. Pflanzen und/oder nachfolgende Arbeitsschritte in vorteilhafter Weise automatisierbar.

Beispielsweise wird die Bahnlinie als gekrümmte bzw. bogenförmige Linie abgespeichert. Vorzugsweise wird die Bahnlinie als zweidimensionale Linie ausgebildet. Darüber hinaus ist es sogar möglich, die Bahnlinie als dreidimensional ausgebildete Linie abzuspeichern, wobei insbesondere eine Höhenerfassungseinheit zum Erfassen der vertikalen Position bzw. Höhe vorzusehen ist. Bei dieser Variante kann einerseits die Länge der Bahnlinie z.B. für Abrechnungszwecke oder dergleichen unter anderem im bergigen bzw. welligen Gelände besonders genau bestimmt werden.

Andererseits kann auch eine Kontrolle bzw. Lenkung der Arbeitsmaschine bzw. des Arbeitsaggregates in einem nachfolgenden Bearbeitungsschritt auch in dreidimensionaler Weise verwirklicht werden. Hierdurch kann eine besonders exakte Durchführung des nachfolgenden Arbeitsschritts erreicht werden.

Zur Generierung der Bahnlinie der auf dem Feld erzeugten Objektreihe gemäß der Erfindung ist sowohl eine kontinuierliche als auch eine diskontinuierliche Orts- bzw. Positionsbestimmung bzw. Positionskoordinatenbestimmung denkbar. Hierbei wird z.B. exakt die vom Arbeitsaggregat erzeugte Bahnlinie der auf dem Feld erzeugten Objektreihe bestimmt und abgespeichert. Hierdurch wird eine besonders genaue Abspeicherung der Bahnlinie der auf dem Feld erzeugten Objektreihe realisierbar.

Alternativ hierzu wird in einer bevorzugten Variante der Erfindung diskontinuierlich die Bahnlinie abgespeichert bzw. weist die gespeicherte Bahnlinie der auf dem Feld erzeugten Objektreihe mehrere, voneinander beabstandete Objektpunkte auf. Dies wird beispielsweise dadurch realisiert, dass vorzugsweise in un-/regelmäßigen zeitlichen und/oder räumlichen Abständen ein Objektpunkt der erst auf dem Feld erzeugten Objektreihe abgespeichert wird.

Vorteilhafterweise ist zumindest der Anfang und das Ende der Bahnlinie der auf dem Feld erzeugten Objektreihe abgespeichert. Möglicherweise variieren die zeitlichen und/oder räumlichen Abstände in Abhängigkeit vom Verlauf der Bahnlinie bzw. deren Krümmung.

Vorteil bei einer Variante der Erfindung, bei dem die gespeicherte Bahnlinie als voneinander beanstandete Objektpunkte realisiert wird, ist vor allem der vergleichsweise geringe Aufwand bzw. geringe Speicherbedarf.

Generell ist bei der Variante mit mehreren, voneinander beabstandeten Objektpunkte von Vorteil, die Bahnlinie bzw. auf dem Feld erzeugte Objektreihe mittels mathematischer Verfahren zu interpolieren und/oder zu extrapolieren. Beispielsweise wird die Bahnlinie mittels mathematischer Verfahren aus den abgespeicherten Daten als Splinelinie, Potenzreihe oder dergleichen generierbar. Hierdurch wird einerseits vergleichsweise wenig Speicher zum Abspeichern der Bahnlinie gemäß der Erfindung und andererseits eine vergleichsweise hohe Genauigkeit der abgespeicherten Bahnlinie realisierbar.

In besonderen Anwendungsfällen ist es vor allem in der Landtechnik ausreichen, eine geringere Genauigkeit der abgespeicherten Bahnlinie der auf dem Feld erzeugten Objektreihe zu verwirklichen. Beispielsweise ist hierfür eine Bahnlinie als Polygonzug vorzusehen. Vorteilhafterweise ist die gespeicherte Bahnlinie der Objektreihe als Polygonzug ausgebildet, wobei insbesondere die voneinander beabstandeten Objektpunkte als Eckpunkte des Polygonzugs ausgebildet sind. Mit Hilfe dieser Maßnahme wird erreicht, dass einerseits wenig Speicher zum Abspeichern der Objektpunkte notwendig ist und darüber hinaus dass besonders einfache mathematische Interpolationsverfahren, beispielsweise durch einfaches Verbinden der Eckpunkte eine durchgehende Bahnlinie erzeugen können, die entsprechend vorteilhaft abspeicherbar ist. Zum Beispiel ist das Abspeichern der Bahnlinie eines Schwadens, insbesondere der von einem sogenannten Großschwader mit ggf. etwa 20 m Arbeitsbreite erzeugt wird, als Polygonzug mit relativ grober Auflösung vollkommen ausreichend.

Dagegen kann beispielsweise beim Mähen oder sogar beim Pflügen eine höhere Genauigkeit der abgespeicherten Bahnlinie der auf dem Feld erzeugten Objektreihe, d.h. des Mähgutschwadens oder der Bearbeitungsgrenze des Pfluges bzw. des Mähwerks, gewünscht werden. Die höhere Genauigkeit der abgespeicherten Bahnlinie gemäß der Erfindung kann beispielsweise durch das Verwenden entsprechend aufwändigerer mathematischer Verfahren realisieret werden, wobei vorzugsweise eine bogenförmige Bahnlinie abgespeichert wird.

Andererseits kann die hohe Genauigkeit der Bahnlinie alternativ hierzu auch dadurch realisiert werden, dass beispielsweise die Abstände der erst auf dem Feld erzeugten Objektpunkte verringert werden. Vorteilhafterweise ist die Genauigkeit der abgespeicherten Bahnlinie der auf dem Feld erzeugten Objektreihe einstellbar, insbesondere in Stufen einstellbar. Hierdurch kann beispielsweise der Landwirt oder dergleichen je nach Bearbeitungsvorgang eine sehr grobe, grobe, feine und/oder sehr feine Einstellung wählen. Gegebenenfalls ist dies sogar in Abhängigkeit des verwendeten Arbeitsaggregates weitestgehend automatisiert realisierbar. Hierbei können z.B. sogenannte "Plug and Play"-Systeme verwendet werden.

Darüber hinaus ist denkbar, dass zur Minimierung des notwendigen Arbeitsspeichers beispielsweise bei Geradeausfahrt, der Abstand zwischen zwei abgespeicherten Objektpunkten während des Betriebs angepasst bzw. vergrößert wird.

In einer besonderen Weiterbildung der Erfindung ist eine zweite, wenigstens ein zweites Arbeitsaggregat umfassende landwirtschaftliche Arbeitsmaschine zum Bearbeiten des landwirtschaftlichen Feldes und/oder der auf dem Feld angeordneten Pflanzen und/oder der auf dem Feld erzeugten Objektreihe vorgesehen. Beispielsweise ist die zweite Arbeitsmaschine als Feldhäcksler oder dergleichen ausgebildet, der beispielsweise einen mittels der ersten Arbeitsmaschine erzeugten Schwad aus Heu, Stroh oder Grünfutter vom Feld abernten soll.

Vorteilhafterweise ist wenigstens eine Lenkeinheit zum Lenken der ersten Arbeitsmaschine oder der zweiten Arbeitsmaschine vorgesehen. Vorzugsweise ist die Lenkeinheit als automatische Lenkeinheit zum automatischen bzw. selbsttätigen Lenken der ersten Arbeitsmaschine und/oder zweiten Arbeitsmaschine ausgebildet.

In einer bevorzugten Variante der Erfindung ist die gespeicherte Bahnlinie der auf dem Feld erzeugten Objektreihe als Führungslinie eines Soll-Fahrweges der ersten Arbeitsmaschine und/oder der zweiten Arbeitsmaschine ausgebildet. Mit Hilfe dieser Maßnahmen wird ein automatisiertes Lenken der ersten Arbeitsmaschine und/oder der zweiten Arbeitsmaschine in besonders einfacher Weise realisierbar. Hierzu ist in vorteilhafter Weise die Lenkeinheit als Führungseinheit zum Führen der ersten Arbeitsmaschine und/oder der zweiten Arbeitsmaschine an der gespeicherten-Bahnlinie der auf dem Feld erzeugten Objektreihe ausgebildet. Dies ermöglicht ein besonders exaktes Nachfahren der abgespeicherten Bahnlinie bzw. der Objektreihe, so dass die Bearbeitung der erst auf dem Feld erzeugten Objektreihe in vorteilhafter Weise automatisiert wird.

Beispielsweise wird beim Pflügen die Bahnlinie der Bestandskante gemäß der Erfindung abgespeichert, die dann als Soll-Fahrweg für die nächste Pflugreihe verwendbar ist. Hierdurch entfällt beispielsweise eine aufwändige Sensorik zum Erfassen der Bestandskante.

Gemäß der Erfindung wird im Unterschied zum Stand der Technik, wobei eine zeitnahe Erfassung der Bestandskante und dem Lenken realisiert wird, generell in vorteilhafter Weise eine zeitliche Entkopplung zwischen dem Erfassen der erzeugten Bestandskante und dem Nachfahren entlang der Bestandskante realisiert. Hierbei wird in einer ersten Arbeitsreihe bzw. bei einer ersten Pflugfahrt die hierbei erst auf dem Feld erzeugte Bestandskante bzw. Objektreihe gemäß der Erfindung abgespeichert und zu einem zeitlich hiervon beabstandeten bzw. zu einem beliebigen Zeitpunkt später als Soll-Fahrweg für einen nachfolgenden Pflugfahrweg bzw. Arbeitsschritt verwendet.

Generell kann das zuvor genannte Beispiel auch auf einen Mähdrescher bzw. Maishäcksler, ein Mähwerk bzw. einem Großflächenmähwerk etc. entsprechend übertragen werden.

Darüber hinaus kann gemäß der Erfindung auch der mittels einer ersten Arbeitsmaschine erzeugte Schwad als Bahnlinie gemäß der Erfindung abgespeichert und in vorteilhafter Weise zeitlich versetzt, z.B. einige Minuten, einen oder mehrere Tage später, zum Lenken eines Feldhäckslers oder dergleichen verwendet werden. Dies bedeutet, dass eine erste Arbeitsmaschine die hierbei frei gewählte und auf dem Feld erzeugte Objektreihe bzw. den Schwad als Bahnlinie gemäß der Erfindung abspeichert und/oder einer zweiten Arbeitsmaschine etc. in vorteilhafter Weise übermittelt und diese die Daten bzw. die Bahnlinie abspeichert.

Die Übermittlung kann beispielsweise dadurch geschehen, dass die Speichereinheit von einer Arbeitsmaschine auf die andere Arbeitsmaschine die entsprechenden Signale bzw. Daten per Datenträger, Kabel oder drahtlos beispielsweise mittels Funksignalen übermittelt. Vor allem bei der drahtlosen Variante können Bluetooth-Systeme, Satelliten-Systeme oder dergleichen in vorteilhafter Weise verwendet werden.

Generell ist von Vorteil, dass bereits vorhandene GPS-System oder ähnliche Systeme in vorteilhafter Weise einzubeziehen. Dies trifft in besonderem Maß für die Bestimmung der Position bzw. der Positionskoordinaten zur Bestimmung der Bahnlinie bzw. der Objektpunkte zu. Derartige Systeme weisen bereits heute eine Genauigkeit von < 5 cm auf, was in der Landtechnik im Allgemeinen ausreichen ist.

Darüber hinaus ist denkbar, dass mit Hilfe der abgespeicherten Bahnlinie bzw. Bahnlinien mittels elektronischer Recheneinheiten ein optimiertes Abernten bzw. Aberntefahrwegsystem, beispielsweise für die erzeugten Schwade, auf einem Feld verwirklicht werden kann. Hierdurch kann sowohl Zeit als auch Energie beim Abernten entsprechender bzw. großer Felder erreicht werden.

Vorzugweise ist wenigstens eine Positionsanzeigevorrichtung zum Anzeigen der gespeicherten Bahnlinie der Objektreihe vorgesehen. Vor allem durch die Sichtbarmachung der abgespeicherten Bahnlinie der zuvor frei gewählten und auf dem Feld erzeugten Objektreihe wird es für den Führer der Arbeitsmaschine einfacher beispielweise die Bahnlinie manuell nachzufahren. Bei einer automatisierten Lenkung entlang der abgespeicherten Bahnlinie kann dem Führer der Arbeitsmaschine eine einfachere Kontrollfunktion zukommen und dieser ggf. Störungen bzw. Abweichungen sofort bemerken bzw. manuell beseitigen.

Vorteilhafterweise ist die Positionsanzeigevorrichtung als optische und/oder akustische Positionsanzeigevorrichtung zum visuellen bzw. akustischen Anzeigen der gespeicherten Bahnlinie ausgebildet.

Vorzugsweise ist die Positionsanzeigevorrichtung zum Anzeigen der Ist-Position der ersten Arbeitsmaschine und/oder der zweiten Arbeitsmaschine ausgebildet. Hierdurch kann der Führer der Arbeitsmaschine neben der gespeicherten Bahnlinie auch in vorteilhafter Weise die Ist-Position erfassen und miteinander vergleichen.

In einer besonderen Weiterbildung der Erfindung ist die Positionsanzeigevorrichtung zum Anzeigen einer Differenz der Ist-Position der ersten Arbeitsmaschine und/oder der zweiten Arbeitsmaschine zur gespeicherten Bahnlinie der auf dem Feld erzeugten Objektreihe ausgebildet. Hierdurch wird die Anzeige und/oder die Kontrolle durch den Führer der Arbeitsmaschine weiter verbessert.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematisch dargestellte landwirtschaftliche Arbeitseinheit mit einem Schwader und einem Häcksler gemäß der Erfindung;
- Figur 2: ein schematisch dargestellter Wender gemäß der Erfindung;
- Figur 3: ein schematisch dargestellter Mähdrescher gemäß der Erfindung und
- Figur 4: ein schematisch dargestellter Traktor mit Pflug gemäß der Erfindung.

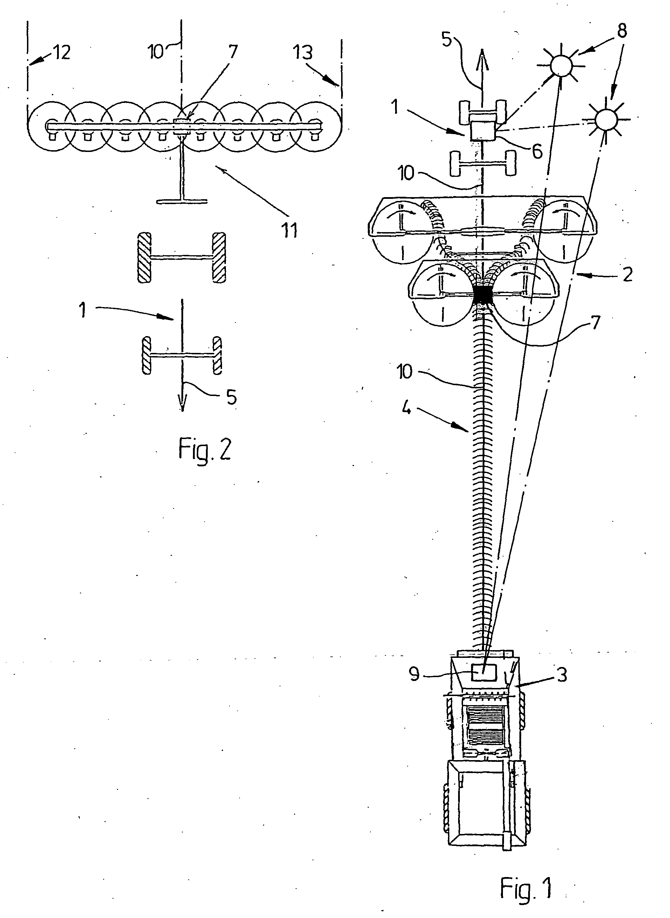

In Figur 1 ist schematisch ein von einem Traktor 1 gezogener Schwader 2 dargestellt, der mit einem Häcksler 3 ein Feld bzw. auf dem Feld liegendes Heu oder dergleichen aberntet. Der Schwader 2 erzeugt einen Schwad 4, der vom Häcksler 3 aufgenommen und ohne nähere Darstellung auf ein vielfach bekanntes Ladefahrzeug befördert wird. Sowohl der Häcksler 3 als auch der Traktor 1 fährt in Fahrtrichtung 5. Hierbei fährt ein Fahrer den Traktor 1 auf einem im Wesentlichen frei gewählten Fahrweg ab. Das heißt, der Fahrer des Traktors 1 ist völlig autonom bzw. frei bezüglich seines Fahrwegs bzw. wie er das Feld abfährt. Der Fahrer wird lediglich vor allem örtliche Gegebenheiten und/oder seine Erfahrung zur Festlegung des konkreten Fahrwegs in sein Denken einbeziehen.

Gemäß der Erfindung umfasst beispielsweise der Traktor 1 eine Positionseinheit 6 zur Bestimmung der Position bzw. des Ortes bzw. der Positionskoordinaten. Alternativ oder in Kombination hierzu kann auch der Schwader 2 eine Positionseinheit 7 zur Bestimmung der Position bzw. Positionskoordinaten aufweisen. Lediglich aus Gründen der Übersichtlichkeit ist als Strichlinie eine Funkverbindung zu Satelliten 8 mit der Positionseinheit 6 des Traktors 1 dargestellt.

Weiterhin umfasst die zweite Arbeitsmaschine bzw. der Häcksler 3 in vorteilhafter Weise eine Positionseinheit 9 und ist ebenfalls mit den Satelliten 8 drahtlos verbunden.

Gemäß der Erfindung wird die erst auf dem Feld erzeugte Objektreihe bzw. der Schwad 4 als Bahnlinie 10 abgespeichert. Ohne nähere Darstellung weist eine oder mehrere der Positionseinheiten 6, 7, 9 eine entsprechende Speichereinheit auf, mit der die Bahnlinie 10 abgespeichert wird. Bei der dargestellten Variante bedeutet dies, dass die Positionseinheit 6, 7, 9 als Speichereinheit 6, 7, 9 ausgebildet ist.

Die abgespeicherte Bahnlinie 10 wird gemäß der Erfindung als Soll-Fahrweg des Häckslers 3 verwendet, so dass eine nicht näher dargestellte Lenkeinheit des Häckslers 3 diesen automatisch entlang der Bahnlinie 10 lenkt.

Mit Hilfe der abgespeicherten Bahnlinie 10 ist eine zeitliche Entkopplung des Schwadens und des Aberntens des Schwades 4 realisierbar. Beispielsweise kann ein Landwirt den Schwad 4 erzeugen und beispielsweise einige Minuten, Stunden oder Tage später kann z.B. ein Lohnunternehmer mit Hilfe des Häckslers 3 den Schwad 4 abernten, wobei dieser automatisch entlang der abgespeicherten Bahnlinie 10 und somit entlang dem Schwad 4 gelenkt wird.

Bei einer zur Figur 1 abgebildeten, alternativen Variante kann beispielsweise eine Funkverbindung direkt zwischen dem Traktor 1 bzw. Schwader 2 und dem Häcksler 3 bestehen. Hierbei werden beispielsweise Bluetooth-Systeme oder dergleichen verwendet. Bei dieser alternativen Variante kann beispielsweise bei einem nahezu zeitgleichen Abernten, wie dies beispielsweise in Figur 1 dargestellt ist, eine direkte Lenkung der hinterher fahrenden Arbeitseinheit bzw. des Häckslers 3 durch die vorausfahrende Arbeitseinheit bzw. den Traktor 1 bzw. Schwader 2 erfolgen. Auch hier muss die Bahnlinie 10 entsprechend abgespeichert werden, da auch hierbei eine zeitliche Entkopplung der Erzeugung des Schwades 4 bzw. der Bahnlinie 10 und des Aberntens des Schwades 4 realisiert werden muss.

Grundsätzlich ist von Vorteil, den Ort bzw. die Positionskoordinaten mittels bereits vorhandener GPS-Systeme oder dergleichen zu bestimmen. Heutige Systeme sind beispielsweise bereits derart genau, dass die Bahnlinie 10 auf wenige Zentimeter genau bestimmt und abgespeichert werden kann.

Generell ist auch von Vorteil, diskontinuierlich, d.h. mehrere Positionspunkte bzw. Ortspunkte in vorteilhafter Weise abzuspeichern, so dass die Bahnlinie 10 als Polygonzug und/oder mittels Iterations- bzw. Extrapolationsverfahren und/oder mittels Splineverfahren bzw. Potenzreihenverfahren etc. generiert wird. Beispielsweise können entsprechende Ortspunkte in zeitlich regelmäßigen und/oder nach bestimmten zurückgelegten Entfernungen in vorteilhafter Weise abgespeichert werden.

In Figur 2 ist schematisch ein Wender 11 dargestellt, der wiederum von einem Traktor 1 gezogen wird. Bei dieser Variante umfasst der Wender 11 die Positionseinheit 7, so dass z.B. eine mittig angeordnete Bahnlinie 10 in einfacher Weise abspeicherbar ist. Da die Arbeitsbreite des Wenders 11 bekannt ist, können auch die beiden Außenkanten 12 bzw. 13 des Wenders 11 bestimmt und als Bahnlinien 13, 14 abgespeichert werden.

In vorteilhafter Weise kann bei einem derartigen Arbeitsaggregat 11 bzw. Wender 11 nicht die mittige Bahnlinie 10, sondern eine oder beide Außenkanten 12, 13 gemäß der Erfindung als Bahnlinie abgespeichert werden, da diese die besonders relevante Bahnlinie bzw. Bearbeitungskante bilden. Bei einer weiteren Überfahrt des Feldes kann nunmehr der Traktor 1 von der Bahnlinie 10 oder von der Außenkante 12 bzw. 13 geführt werden. Hierbei wird mittels einer nicht näher dargestellten Lenkeinheit des Traktors 1 diesen auf der bei der vorhergehenden oder einer der vorhergehenden Überfahrten abgespeicherten Bahnlinie 10, 12, 13 führen.

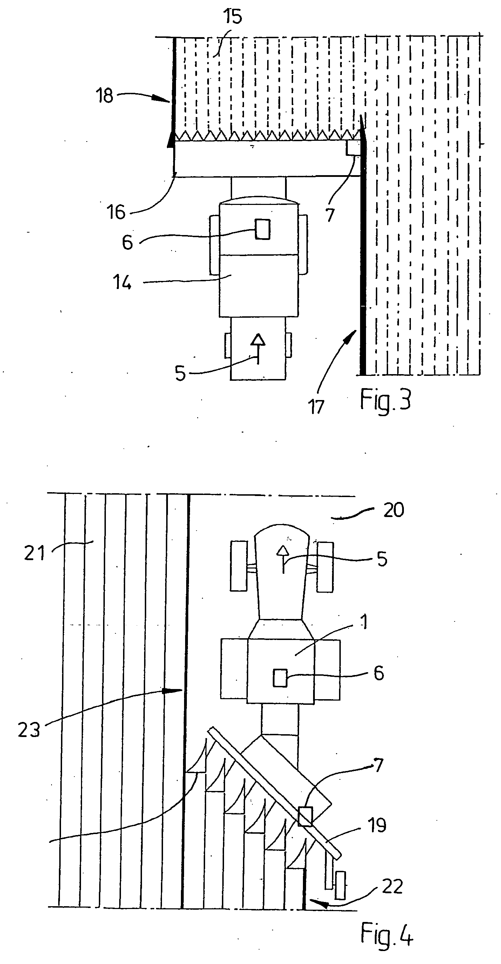

In Figur 3 ist ein Mähdrescher 14 dargestellt, der ein Feld bzw. Pflanzen 15 wie Getreide, Mais oder dergleichen aberntet. Hierfür weist der Mähdrescher 14 ein Arbeitsaggregat 16 auf. Gemäß der Erfindung weist der Mähdrescher 14 weiterhin die Positionseinheit 6 und/oder 7 auf, mit Hilfe derer eine Bahnlinie 17 bzw. eine Bestandskante 17 bestimmt und abspeichert werden kann.

In vorteilhafter Weise wird der Mähdrescher 14 von einer Bahnlinie 18 bzw. einer Bestandskante 18 aus einer vorhergehenden Überfahrt des Feldes geführt bzw. die nicht näher dargestellte automatische Lenkeinheit lenkt den Mähdrescher 14 entlang der Bahnlinie 18.

Alternativ hierzu kann auch ein in gewisser Entfernung vorausfahrender, zweiter Mähdrescher (nicht dargestellt) gemäß der Erfindung die Bahnlinie 18 bzw. Bestandskante 18 bestimmen und abspeichern. Beispielsweise per Satellit und/oder Funk etc. wird diese dem Mähdrescher 14 übermittelt, so dass dieser wiederum in vorteilhafter Weise entlang der Bahnlinie 18 geführt wird. Weiterhin kann der Mähdrescher 14 den Verlauf der Bahnlinie 17 einem ihm nachfolgenden, nicht näher dargestellten Mähdrescher drahtlos übermitteln, so dass dieser entlang der Bahnlinie 17 geführt wird.

In Figur 4 ist schematisch ein Traktor 1 mit einem Pflug 19 dargestellt. Hierbei weist das Feld einen unbearbeiteten Abschnitt 20 und einen bearbeiteten Abschnitt 21 auf. Der Pflug erzeugt eine Bestandskante 22 bzw. Bahnlinie 22, die mittels der Positionseinheit 6 des Traktors 1 und/oder der Positionseinheit 7 des Arbeitsaggregates bzw. des Pfluges 19 bestimmt und in vorteilhafter Weise abgespeichert wird.

Darüber hinaus ist in Figur 4 eine weitere Bahnlinie 23 dargestellt, die in einer vorhergehenden Überfahrt des Feldes erzeugt und gemäß der Erfindung abgespeichert wurde. Entlang der Bahnlinie 23 wird mittels einer nicht näher dargestellten Lenkeinheit der Traktor 1 automatisch geführt.

Zudem sind weitere Varianten von Bearbeitungsmaschinen denkbar, die gemäß der Erfindung eine Objektreihe bzw. Bestandskante und/oder Pflanzenreihe oder dergleichen erzeugen und wobei gemäß der Erfindung eine Bahnlinie entsprechend abgespeichert wird. Vorzugsweise wird eine derartig abgespeicherte Bahnlinie zum Führen einer Arbeitseinheit verwendet. Alternativ oder in Kombination hierzu kann auch die abgespeicherte Bahnlinie beispielsweise für Abrechnungszwecke verwendet werden, wobei insbesondere die Länge der Bahnlinie von besonderer Bedeutung ist.

Bei den zuvor beschriebenen Beispielen, bei denen die Bahnlinie gemäß der Erfindung als Bestandskante ausgebildet ist, ist in vorteilhafter Weise eine besonders einfache Bestandskantenführung realisierbar. Im Vergleich zum Stand der Technik, wobei aufwändigste Sensoren und EDV-Programme zur Aufbereitung der ermittelten Signale und zur Generierung eines Soll-Fahrweges notwendig sind, wird gemäß der Erfindung lediglich die Position bzw. die Positionskoordinaten erfasst und als Bahnlinie abgespeichert. Diese Bahnlinie kann somit als Bestandskante oder dergleichen zum Führen entsprechender landwirtschaftlicher Maschinen verwendet werden.

### Bezugszeichenliste

- 1.: Traktor
- 2.: Schwader
- 3.: Häcksler
- 4.: Schwad
- 5.: Fahrtrichtung
- 6.: Positionseinheit
- 7.: Positionseinheit
- 8.: Sattelit
- 9.: Positionseinheit
- 10.: Bahnlinie
- 11.: Wender
- 12.: Außenkante
- 13.: Außenkante
- 14.: Mähdrescher
- 15.: Pflanzen
- 16.: Arbeitaggregat
- 17.: Bahnlinie
- 18.: Bahnlinie
- 19.: Pflug
- 20.: Abschnitt
- 21.: Abschnitt
- 22.: Bahnlinie
- 23.: Bahnlinie

## Patentansprüche

1. Landwirtschaftliche Arbeitseinheit mit einer ersten, wenigstens ein erstes Arbeitsaggregat (2, 11, 16, 19), insbesondere ein Mähwerk (16), Schwader (2), Pflug (19) oder dergleichen, umfassenden landwirtschaftlichen und von einer ersten Bedienperson autonom lenkbaren Arbeitsmaschine zum Bearbeiten eines landwirtschaftlichen Feldes (20) und/oder von auf dem Feld angeordneten Pflanzen (15), wobei die erste landwirtschaftliche Arbeitsmaschine auf dem Feld eine von der Bedienperson frei wählbare Fahrstrecke abfährt, so dass das Arbeitsaggregat (2, 11, 16, 19) zum Erzeugen einer auf dem Feld angeordneten, frei gewählten Objektreihe (4, 12, 13, 17, 18, 22, 23), insbesondere einer Erntegutreihe (4) und/oder einer Bestandskante (17, 18, 22, 23), ausgebildet ist und die Arbeitsmaschine wenigstens eine Positionsbestimmungseinheit (6, 7, 9) zum Bestimmen der Position, insbesondere der Positionskoordinaten, der Arbeitsmaschine und/oder des Arbeitsaggregats (2, 11, 16, 19) umfasst, wobei wenigstens eine Speichereinheit (6, 7, 9) zum Speichern der Position vorgesehen ist, **dadurch gekennzeichnet, dass** die Speichereinheit (6, 7, 9) als Objektreihenspeichereinheit (6, 7, 9) zum Speichern der Bahnlinie (10, 12, 13, 17, 18, 22, 23) der auf dem Feld erzeugten Objektreihe ausgebildet ist.

2. Arbeitseinheit nach Anspruch 1, **dadurch gekennzeichnet, dass** die gespeicherte Bahnlinie (10, 12, 13, 17, 18, 22, 23) der auf dem Feld erzeugten Objektreihe mehrere, voneinander beabstandete Objektpunkte aufweist.

3. Arbeitseinheit nach einem der vorgenannten Ansprüche, **dadurch gekennzeichnet, dass** die gespeicherte Bahnlinie (10, 12, 13, 17, 18, 22, 23) der auf dem Feld erzeugten Objektreihe als Polygonzug ausgebildet ist.

4. Arbeitseinheit nach einem der vorgenannten Ansprüche, **dadurch gekennzeichnet, dass** die voneinander beabstandeten Objektpunkte als Eckpunkte des Polygonzugs ausgebildet sind.

5. Arbeitseinheit nach einem der vorgenannten Ansprüche, **dadurch gekennzeichnet, dass** eine zweite, wenigstens ein zweites Arbeitsaggregat umfassende landwirtschaftliche und von einer zweiten Bedienperson autonom lenkbare Arbeitsmaschine (3) zum Bearbeiten des landwirtschaftlichen Feldes und/oder der auf dem Feld angeordneten Pflanzen (4) und/oder der auf dem Feld erzeugten Objektreihe (4) vorgesehen ist.

6. Arbeitseinheit nach einem der vorgenannten Ansprüche, **dadurch gekennzeichnet, dass** wenigstens eine Lenkeinheit zum Lenken der ersten Arbeitsmaschine oder der zweiten Arbeitsmaschine (3) vorgesehen ist.

7. Arbeitseinheit nach einem der vorgenannten Ansprüche, **dadurch gekennzeichnet, dass** die gespeicherte Bahnlinie (10, 12, 13, 17, 18, 22, 23) der auf dem Feld erzeugten Objektreihe als Führungslinie eines Soll-Fahrwegs der ersten Arbeitsmaschine und/oder der zweiten Arbeitsmaschine (3) ausgebildet ist.

8. Arbeitseinheit nach einem der vorgenannten Ansprüche, **dadurch gekennzeichnet, dass** die Lenkeinheit als Führungseinheit zum Führen der ersten Arbeitsmaschine und/oder der zweiten Arbeitsmaschine (3) an der gespeicherten Bahnlinie (10, 12, 13, 17, 18, 22, 23) der auf dem Feld erzeugten Objektreihe ausgebildet ist.

9. Arbeitseinheit nach einem der vorgenannten Ansprüche, **dadurch gekennzeichnet, dass** wenigstens eine Positionsanzeigevorrichtung zum Anzeigen der gespeicherten Bahnlinie (10, 12, 13, 17, 18, 22, 23) der auf dem Feld erzeugten Objektreihe vorgesehen ist.

10. Arbeitseinheit nach einem der vorgenannten Ansprüche, **dadurch gekennzeichnet, dass** die Positionsanzeigevorrichtung zum Anzeigen der Ist-Position der ersten Arbeitsmaschine und/oder der zweiten Arbeitsmaschine (3) ausgebildet ist.

11. Arbeitseinheit nach einem der vorgenannten Ansprüche, **dadurch gekennzeichnet, dass** die Positionsanzeigevorrichtung zum Anzeigen einer Differenz der Ist-Position der ersten Arbeitsmaschine und/oder der zweiten Arbeitsmaschine (3) zur gespeicherten Bahnlinie (10, 12, 13, 17, 18, 22, 23) der auf dem Feld erzeugten Objektreihe ausgebildet ist.
